Europäisches Patentamt

European Patent Office

Office européen des brevets

(11) Veröffentlichungsnummer: **0 263 474**
**A2**

## (12) EUROPÄISCHE PATENTANMELDUNG

(21) Anmeldenummer: 87114530.6

(22) Anmeldetag: 05.10.87

(51) Int. Cl.4: **E04B 1/49 , E04B 1/26**

(30) Priorität: 06.10.86 DE 3634038

(43) Veröffentlichungstag der Anmeldung:
13.04.88 Patentblatt 88/15

(84) Benannte Vertragsstaaten:
AT CH DE FR LI SE

(71) Anmelder: **Bertsche, Peter**
**Tafertsbergstrasse 5**
**D-8371 Prackenbach(DE)**

(72) Erfinder: **Bertsche, Peter**
**Tafertsbergstrasse 5**
**D-8371 Prackenbach(DE)**

(74) Vertreter: **Klunker . Schmitt-Nilson . Hirsch**
**Winzererstrasse 106**
**D-8000 München 40(DE)**

(54) **Stabdübel für den Holzbau.**

(57) Ein als Stabdübel für den Holzbau dienender Stahlstift besitzt einen Schaft (202), der einen durchgehenden H-förmigen Querschnitt mit einem Mittelsteg (205) und zwei seitlich daran anschließenden Flanschen (206, 207) aufweist. Der Querabmessungen von 8 bis 18 mm aufweisende Stabdübel ist an mindestens einem Ende mit Schneiden (222, 223) ausgestattet. Die Schneiden sind an stirnseitigen Enden der Flansche (206, 207) ausgebildet. Weiterhin ist eine Schneide (224) an dem Mittelsteg (205) ausgebildet; diese Schneide (224) ist jedoch - betrachtet in Eintreibrichtung des Stabdübels - gegenüber den Schneiden (222, 223) an den seitlichen Flanschen zurückversetzt. Die Schneiden (222, 223) an den seitlichen Flanschen schneiden die Holzfasern quer zu deren Längsrichtung, bevor der Mittelsteg in das Holz eindringt. So kann eine Rißbildung des Holzes vermieden werden.

Fig. 8

EP 0 263 474 A2

Die Erfindung betrifft einen Stabdübel zur Verwendung im Holzbau und ein Verfahren zur Herstellen eines solchen Stabdübels.

Um Holzteile miteinander zu verbinden, werden üblicherweise Stabdübel eingesetzt, die entweder aus Holz oder aus Stahl bestehen. Die Stabdübel besitzen runden Querschnitt. Zum Verbinden von Holzteilen werden in die Holzteile in bestimmten Abständen mit Hilfe von Schablonen Löcher gebohrt, wobei jeweils zwei Löcher paarweise zugeordnet sind. In diese Löcher werden Stabdübel eingesteckt, die die zusammengefügten Holzteile zusammenhalten.

Das Bohren der Löcher ist praktisch nur unter Zuhilfenahme von Schablonen oder nach exaktem Anreißen der Positionen der Bohrungen möglich.

Das Vorbohren bei Runddübeln hat einerseits den Zweck, das Eintreiben der Dübel in das Holz überhaupt möglich zu machen, andererseits soll das Vorbohren ein Spleißen verhindern. Bei Nägeln kann auf ein Vorbohren bekanntlich verzichtet werden. Es gibt zum Beispiel speziell für den Fensterbau verwendete Sternnägel, das sind Nägel mit durchgehendem sternförmigen Querschnitt. Allerdings sind derartige Nägel mit profiliertem Querschnitt bislang ausschließlich mit eng begrenzten Querabmessungen eingesetzt worden. Die Obergrenze für die Querabmessungen betragen etwa 3 bis 4 mm. Vergrößert man den Querschnitt beispielsweise der Sternnägel, um stärkere Holzverbindungen zu erhalten, so läßt sich ein Spalten des Holzes bei Eintreiben solcher Nägel nicht vermeiden.

Der Erfindung liegt die Aufgabe zugrunde, einen Stabdübel zur Verwendung im Holzbau zu - schaffen, der trotz beträchtlicher Querschnittsabmessungen in Holzteile eingetrieben werden kann, ohne daß vorgebohrt werden muß.

Diese Aufgabe wird durch die in Anspruch 1 angegebene Erfindung gelöst. Vorteilhafte Weiterbildungen der Erfindung ergeben sich aus den Unteransprüchen.

Weiterhin schafft die Erfindung ein Verfahren zum Herstellen eines erfindungsgemäßen Stabdübels. Aufgrund der extrem einfachen Herstellung lassen sich die Stabdübel in großen Stückzahlen sehr billig herstellen.

Durch die angeschärften seitlichen Flansche des Stabdübels wird ein Spleißen des Holzes zuverlässig verhindert, insbesondere dann, wenn gemäß Anspruch 3 die seitlichen Flansche gegenüber der Vorderkante des Mittelstegs vorspringen, also zuerst mit dem Holz in Eingriff kommen. Für diese Ausführungsform wird selbständiger Schutz geltend gemacht. Beim Eintreiben eines solchen Stabdübels in das Holz wird darauf geachtet, daß der Mittelsteg etwa parallel zu den Holzfasern verläuft, so daß die seitlichen Flansche etwa senkrecht zu den Holzfasern verlaufen. Beim Eintreiben des Stabdübels in das Holz kommen die angeschärften seitlichen Flansche zuerst mit dem Holz in Eingriff und schneiden das Holz quer zum Faserverlauf. Wenn etwas später die Vorderkante des Mittelstegs in das Holz eindringt und dabei das Holz parallel zur Holzfaser spaltet, kann sich der Spalt allenfalls bis zu den Punkten vergrößern, wo die Holzfasern durch die angeschärften seitlichen Flansche quer zum Faserverlauf eingeschnitten sind. Das beim Nageln häufig zu beobachtende Spleißen des Holzes wird zuverlässig vermieden. Ohne die erfindungsgemäße Ausbildung des Schaft-Querschnitts, insbesondere in Verbindung mit den angeschärften Vorderenden der seitlichen Flansche würde ein Stabdübel vergleichbarer Art als Spaltwerkzeug dienen, nicht jedoch als Verbindungselement für Holzteile.

Der H-Querschnitt, auch Doppel-T-Querschnitt oder TT-Querschnitt genannt, gibt dem Stabdübel einen festen Halt im Holz, ohne daß das Holz spleißt, selbst wenn die äußeren Abmessungen des Schaft-Querschnitts einem Rechteck mit Kantenlängen zwischen 8 und 18 mm entspricht.

Während bei Rundstabdübeln mit Spannungsspitzen zu rechnen ist, wenn Lochleibungsbeanspruchung auftritt, ergibt sich bei dem erfindungsgemäßen Stabdübel eine im wesentlichen gleichförmige Spannungsverteilung. Dadurch wird die Gefahr des Spaltens des Holzes wesentlich reduziert.

Der H-Querschnitt des Schafts gestattet einen gegenüber Verdrehungen weitestgehend gesicherten Sitz des Stabdübels in den Holzteilen.

Trotz großen Abmessungen des profilierten Schafts läßt sich der Stabdübel relativ leicht in Holz eintrieben, wie es in Holzbaukonstruktionen typischerweise verwendet wird. Da das Vorbohren entfällt, läßt sich mit dem erfindungsgemäßen Stabdübel wesentlich schneller arbeiten als mit den früher üblichen Dübeln runden Querschnitts.

Der erfindungsgemäße Stabdübel kann auch in Verbindung mit sogenannten Raumdübeln eingesetzt werden. Solche Raumdübel haben die Form einer zylindrischen Hülse mit Radialöffnungen, durch die hindurch in radialer Richtung Stabdübel in das Holz ausgetrieben werden, während der Raumdübel in einem vorgebohrten zylindrischen Loch des Holzteils sitzt (vgl. DE-OS 33 18 751).

Im folgenden werden Ausführungsbeispiele der Erindung anhand der Zeichnung näher erläutert. Es zeigen:

Fig. 1 eine perspektivische Ansicht eines Stabdübels

Fig. 2 eine Draufsicht auf den Stabdübel nach Fig. 1

Fig. 3 eine Seitenansicht des Stabdübels nach Fig. 1

Fig. 4 eine Ansicht des Stabdübels nach Fig. 3 von links

Fig. 5 eine Seitenansicht eines weiten Ausführungsbeispiels eines Stabdübels

Fig. 6 eine Ansicht des in Fig. 5 gezeigten Stabdübels von links

Fig. 7 eine perspektivische Ansicht des Stabdübels nach Fig. 5

Fig. 8 eine perspektivische Ansicht einer dritten Ausführungsform eines Stabdübels

Fig. 9 eine Draufsicht auf den Stabdübel nach Fig. 8 von oben

Fig. 10 eine Vorderansicht des Spitze des Stabdübels nach Fig. 8

Fig. 11 eine Seitenansicht der Spitze des Stabdübels nach Fig. 8

Fig. 12 eine perspektivische Ansicht der Spitze einer weiteren Ausführungsform eines Stabdübels und

Fig. 13 eine schematische Skizze, die den Grundriß des Stabdübels nach Fig. 12 darstellt, wenn dieser in ein Holzstück H eingetrieben ist.

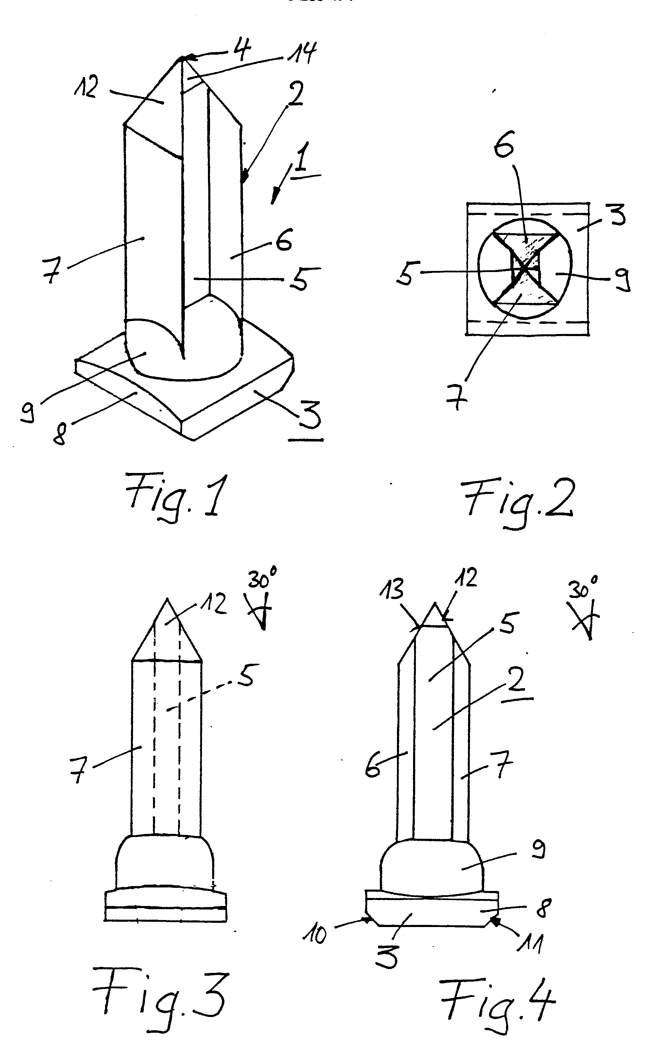

Der in Fig. 1 perspektivisch dargestellte Stabdübel 1 besteht aus einem Schaft 2 und einem Kopf 3. Der Schaft ist an dem dem Kopf 3 gegenüberliegenden Ende mit einer Spitze 4 ausgestattet.

Wie insbesondere aus Fig. 2 hervorgeht, besitzt der Schaft einen H-oder TT-Querschnitt mit einem Mittelsteg 5 und daran auf zwei einander gegenüberliegenden Seiten anschließenden seitlichen Flanschen 6 und 7. Die insgesamt vier Außenkanten der Flansche 6 und 7 definieren einen etwa quadratischen Grundriß.

Der Kopf 3 besteht aus einer etwa quadratischen Grundplatte 8 und einem halbkugelförmigen Sockel 9, an den sich der Schaft 2 anschließt. Wie Fig. 2 zeigt, sind die vier Außenkanten der Flansche 6 und 7 von einem Quadrat umschrieben.

Wie aus den Fig. 3 und 4 hervorgeht, ist die Grundplatte auf der dem Schaft 2 abgewandten Seite mit zwei Abschrägungen 10 und 11 versehen, während die den Abschrägungen gegenüberliegende Seite, auf der der Sockel 9 sitzt, etwas bogenförmig ausgestaltet ist.

Die Spitze des Schafts ist durch Abschrägungen 12 und 13, die an die Flansche 7 bzw. 6 anschließen, sowie zwei dazu senkrechte Abschrägungen gebildet, von denen eine in Fig. 1 mit dem Bezugszeichen 14 angedeutet ist. Diese beiden kleineren Abschrägungen schließen an die beiden Außenflächen des Mittelstegs 5 an. Der Winkel der Abschrägungen bezüglich der Längsachse beträgt etwa 30°.

Wie aus Fig. 2 hervorgeht, bilden die Flansche an ihren Außenkanten jeweils einen spitzen Winkel. Dieser beträgt vorzugsweise zwischen 35 und 45°, im dargestellten Ausfüh führungsbeispiel 40°.

Durch einen derart spitzen Winkel läßt sich der Stabdübel leicht in Holz eintreiben. Je nach Anwendungsfall besitzt das durch die Außenkanten der Flansche 6 und 7 definierte Rechteck Kantenlängen von 8 bis 18 mm, während durch die beiden Außenseiten des Mittelstegs 5 ein Rechteck gebildet wird, dessen Kantenlängen zwischen 2,5 und 4,5 vorzugsweise zwischen 3 und 4 mm betragen.

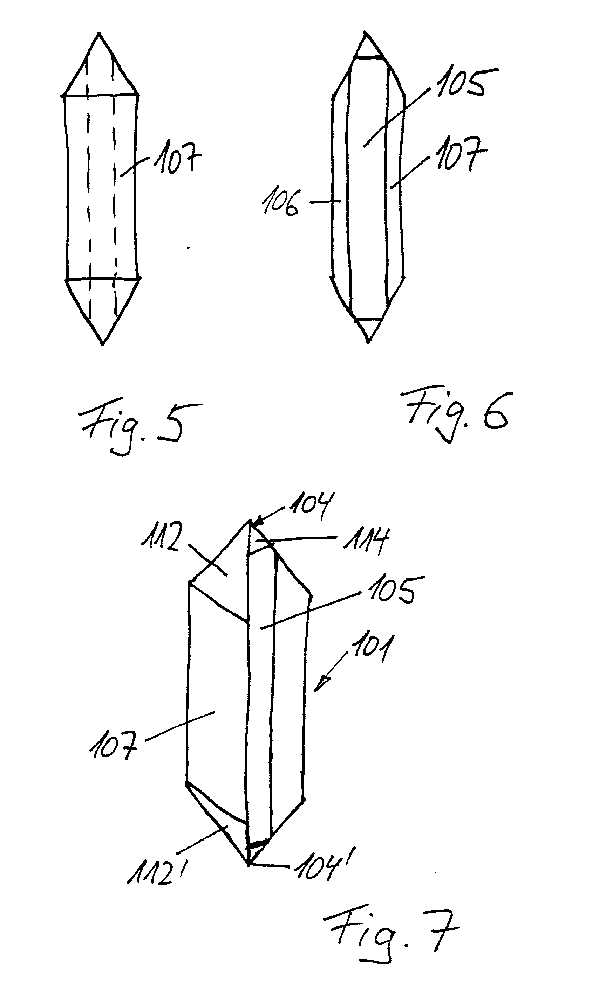

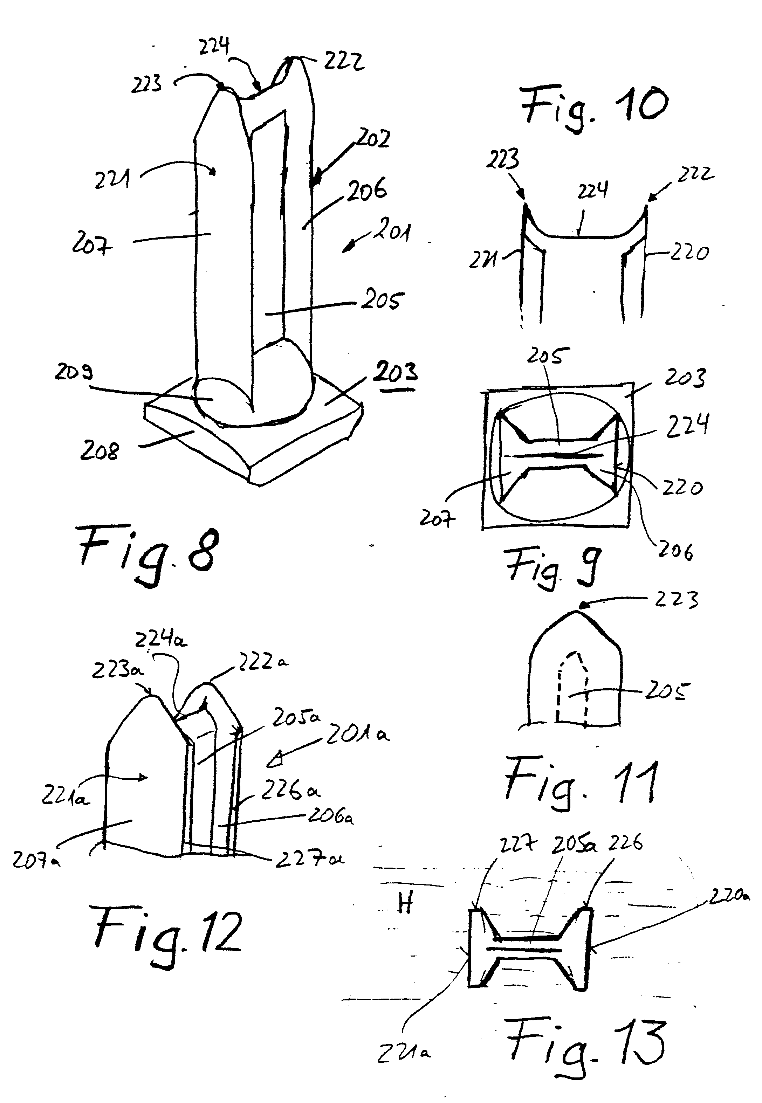

Der Stabdübel 1 läßt sich leicht in Verbindung mit einem sogenannten Raumdübel verwenden, wie er zum Beispiel in der DE-OS 33 18 751 dargestellt ist. Der Stabdübel kann aus Stahlguß hergestellt werden. Möglich ist auch die Herstellung aus gewalztem Stahl, oder durch Ziehen durch eine Ziehmatrize. In den Fig. 5 und 7 ist eine andere Ausführungsform des erfindungsgemäßen Stabdübels dargestellt. In den Fig. 5 und 7 sind für entsprechende Teile ähnliche Bezugszeichen verwendet, wie in den Fing. 1 bis 4, jedoch jeweils um 100 erhöht. Der Querschnitt bei deisem Stabdübel ist der gleiche wie der des in Fig. 2 gezeigten Schafts 2. Wie aus Fig. 7 hervorgeht, ist der Stabdübel 101, der einen Mittelsteg 105 und zwei Flansche 106 und 107 aufweist, an beiden Enden mit einer Spitze 104 bzw. 104' versehen. Hierdurch läßt sich der Dübel beidseitig in zu verbindende Holzteile eintreiben.

Eine besonders bevorzugte Ausführungsform der Erfindung ist in den Figuren 8 bis 13 dargestellt, wobei die Figuren 12 und 13 eine Abwandlung der Ausführungsform nach Fig. 8 bis 11 darstellen.

In den Figuren 8 bis 11 sind entsprechende Teile wie in den vorausgehenden Figuren mit ähnlichen, jedoch um 100 bzw. um 200 erhöhten Bezugszeichen versehen.

Nach Fig. 8 besitzt der Stabdübel 201 einen Schaft 202, an den ein Kopf 203 anschließt. Der H-förmige Querschnitt des Schafts 202 umfaßt einen Mittelsteg 205 und zwei seitlich daran anschließende seitliche Flansche 206, 207. Die beiden Flansche 206 und 207 besitzen Außenflächen 220 bzw. 221. Die Flächen 220, 221 laufen in einen halbkugelförmigen Sockel 209 auf einer Grundplatte 208 ein.

Im Bereich des Eintreibendes des Stabdübels 201 münden die Außenflächen 220 und 221 der Flansche 206 bzw. 207 in Schneiden 222 bzw. 223. Die Schneiden laufen mittig bezüglich des Mittelstegs 205 spitz zu. Der Mittelsteg selbst mündet in eine Schneide 224. Die Schneide 224 ist, wie Figuren 8 und 10 deutlich zeigen, gegenüber den Spitzen der Schneiden 222, 223 zurückversetzt.

Anstelle des Kopfs 203 kann der Stabdübel 201 auch am unteren Ende mit Schneiden ählich den Schneiden 222-224 ausgebildet sein.

Die Herstellung des Stabdübels 201 ist äußerst einfach. Zunächst wird ein Stabdübel-Rohling mit H-förmigen Querschnitt als Stahlgußteil hergestellt. Dort, wo die Schneiden 222-224 auszubilden sind, wird ein Zylinderfräser in Richtung auf den Mittelsteg 205 bewegt, und zwar unter spitzem Winkel zur Längsachse des Stabdübels, und jeweils von der vorderen und hinteren Seite her. Dadurch werden die Schneiden 222 und 223 am Ende der Schneidabschnitte 206, 207 gebildet, und gleichzeitig wird der Mittelabschnitt 206 unter Bildung der Schneide 224 angespitzt.

Die Figuren 12 und 13 zeigen eine Variante des in den Figuren 8 bis 11 dargestellten Stabdübels. Nach Fig. 12 besitzt der Stabdübel 201a Flansche 206a und 207a mit einem zwischen diesen Schneidabschnitten befindlichen Mittelsteg 205a. Die Flansche laufen in Verlängerung ihrer Außenseiten 220a, 221a in Schneiden 222a bzw 223a aus. Der Mittelabschnitt 205a mündet in einer Schneide 224a.

Anders als bei dem Ausführungsbeispiel nach Fig. 8 bis 11 sind die seitlichen Außenkanten der Flansche 206a und 207a nicht als scharfkantige Schneiden ausgebildet, sondern sind abgeflacht. Sie bilden schmale, 0,5-1 mm breite, flächige Rücken, die parallel zum Mittelsteg 205a verlaufen. Die Abflachungen 226, 227 verhindern ein übermäßig starkes Einschschneiden der Holzfasern, wenn der Stabdübel 201a gemäß Fig. 13 so in ein Holzstück H eingetrieben wird, daß die Außenseiten 220a, 221a etwa senkrecht zu den Holzfasern verlaufen.

Der in den Figuren 8 bis 11 dargestellte Stabdübel wird ebenfalls in der in Fig. 13 skizzierten Orientierung in die Holzfasern eingetrieben. Die Schneiden 222, 223 bzw. 222a und 223a schneiden die Holzfasern, bevor die nachrückende Schneide 224 bzw. 224a des Mittelstegs des Stabdübels nachrückt und dabei das Holz in Längsrichtung der Fasern spaltet. So kann die durch den Mittelsteg bewirkte Spaltung der Holzfasern nicht zu einem Spleißen des Holzes führen.

**Ansprüche**

1. Stabdübel zur Verwendung im Holzbau, mit einem profilierten Schaft (2, 102, 202) und angeformtem Einschlagende (4; 104, 104'; 222-224; 222a-224a), dadurch **gekennzeichnet**, daß der Schaft (2) ein über seine Länge gleichbleibenden Querschnitt in H-Form mit einem Mittelsteg (5; 105; 205; 205a) und einander gegenüberliegenden seitlichen Flanschen (6, 7; 106, 107; 206, 207; 206a, 207a) aufweist.

2. Stabdübel nach Anspruch 1, dadurch **gekennzeichnet**, daß das Einschlagende (4; 104, 104') als Spitze durch den spitz zulaufenden Mittelsteg (5; 105) gebildet wird und die Übergangskanten von der Spitze des Mittelstegs (5; 105) zu den seitlichen Flanschen (6, 7; 106, 107) angeschärft sind.

3. Stabdübel nach Anspruch 1, dadurch **gekennzeichnet**, daß das Einschlagende (222-224; 222a-224a) durch die gegenüber dem Mittelsteg (205, 205a) vorgezogenen und angeschärften seitlichen Flansche (206, 207; 206a, 207a) gebildet wird und die Vorderkante (224, 224a) des Mittelstegs (205, 205a) ebenfalls angeschärft ist und gegenüber dem Flanschen zurückversetzt ist, so daß beim Eintreiben in das Holz zuerst die seitlichen Flansche mit dem Holz in Eingriff kommen.

4. Stabdübel nach Anspruch 3, dadurch **gekennzeichnet**, daß die seitlichen Flansche (206, 207; 206a, 207a) am Einschlagende spitz zulaufen und Schneiden (222, 223; 222a, 223a) bilden, an die die Außenflächen der seitlichen Flansche (206, 207; 206a, 207a) glatt anschließen.

5. Stabdübel nach einem der Ansprüche 1 bis 4, dadurch **gekennzeichnet**, daß der Profilquerschnitt von einem Rechteck umschrieben wird, dessen Kantenlängen 8....18 mm betragen.

6. Stabdübel nach einem der Ansprüche 1 bis 5, dadurch **gekennzeichnet**, daß die Außenkanten der seitlichen Flansche (206a, 207a) parallel zu dem Mittelsteg (205a) des Schafts flächig mit einer Breite von 0,5....1,0 mm ausgebildet sind.

7. Stabdübel nach einem der vorhergehenden Ansprüche, dadurch **gekennzeichnet**, daß er an beiden Enden mit einer Einschlagspitze (104, 104') versehen ist.

8. Stabdübel nach einem der Ansprüche 1 bis 6, dadurch **gekennzeichnet**, daß er einen Kopf (3, 203) aufweist.

9. Stabdübel nach einem der Ansprüche 1 bis 8, dadurch **gekennzeichnet**, daß er aus Stahlguß besteht.

10. Stabdübel nach einem der Ansprüche 1 bis 8, dadurch **gekennzeichnet**, daß er aus gewalztem Stahl besteht.

11. Stabdübel nach einem der Ansprüche 6 bis 10, **gekennzeichnet** durch folgende Merkmale:

a) die Breite der seitlichen Flansche (206a, 207a) beträgt 12 mm;

b) die Breite des Stabdübels zwischen den Flansch-Außenflächen (220a, 221a) beträgt 14 mm;

c) die Dicke des Mittelstegs beträgt 3,0....3,5 mm; und

d) die Flanschdicke, also der Abstand zwischen einer Flansch-Außenfläche und dem Mittelsteg beträgt jeweils ca. 3,5 mm.

12. Verfahren zum Herstellen eines Stabdübels nach einem der Ansprüche 3 bis 11, dadurch **gekennzeichnet**, daß das Ende eines Profilstücks mit H-Querschnitt von zwei Seiten her mit einem Zylinderfräser symmetrisch angeschliffen wird, wobei die Achse des Zylinderfräsers einen spitzen Winkel zur Längsachse des Stabdübels bildet.

Fig.1

Fig.2

Fig.3

Fig.4

Fig. 5

Fig. 6

Fig. 7

Fig. 10

Fig. 8

Fig. 9

Fig. 11

Fig. 12

Fig. 13